(19) Europäisches Patentamt
European Patent Office
Office européen des brevets

(11) **EP 2 239 803 A1**

(12) **DEMANDE DE BREVET EUROPEEN**

(43) Date de publication:
**13.10.2010 Bulletin 2010/41**

(51) Int Cl.:
*H01M 4/38* *(2006.01)*

(21) Numéro de dépôt: **09290266.7**

(22) Date de dépôt: **10.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(71) Demandeurs:
• **SAFT GROUPE SA**
  **93170 Bagnolet (FR)**
• **CNRS (Centre National De Recherche Scientifique)**
  **75794 Paris Cedex 16 (FR)**
• **Universite de Paris XII Val de Marne**
  **94010 Creteil Cedex (FR)**

(72) Inventeurs:
• **Jordy, Christian**
  **33440 Saint Louis de Montferrand (FR)**
• **Caillon, Georges**
  **33520 Bruges (FR)**
• **Audry, Claudette**
  **33520 Bruges (FR)**
• **Cuevas, Fermin**
  **91510 Iardy (FR)**
• **Latroche, Michel**
  **78210 Saint-Cyr-L'Ecole (FR)**
• **Hezeque, Thierry**
  **33240 Aubie Espessas (FR)**

(74) Mandataire: **Hirsch & Associés**
  **58, avenue Marceau**
  **75008 Paris (FR)**

(54) **Composition de matiere active pour electrode negative d'accumulateur lithium-ion.**

(57) Un alliage comprenant étain, silicium et carbone, et contenant une phase cristalline M-Sn, M étant un métal inerte.

Un alliage comprenant étain et silicium, comprenant :

a) une phase nanocristalline contenant au moins 50% atomique de l'élément silicium Si° ;

b) une phase nanocristalline contenant un composé à base d'étain ;

c) une phase nanocristalline constituée de l'élément étain Sn°.

Un procédé de fabrication de cet alliage.

Figure 6

**Description**

DOMAINE TECHNIQUE

Le domaine technique auquel se rapporte l'invention est celui des alliages métalliques à base de silicium et d'étain utilisés comme matériaux d'électrode négative (anode) d'accumulateur lithium-ion. L'invention se rapporte aussi au domaine technique des procédés de fabrication d'alliages métalliques à base de silicium et d'étain.

ETAT DE LA TECHNIQUE

Le graphite est connu comme matériau d'électrode négative d'accumulateur lithium-ion. Ce matériau présente une capacité électrochimique théorique de 370 mAh/g et pratique d'environ 340 mAh/g, ce qui peut être largement amélioré en utilisant de nouveaux matériaux.

Les matériaux à base d'étain et de silicium présentent une capacité théorique de stockage électrochimique respectivement 2,5 et 10 fois plus élevée que le graphite. Cependant, ils présentent une durée de vie très faible en raison de la forte variation volumique qui a lieu au cours des cycles de lithiation / délithiation du matériau.

Les matériaux composites à base de graphite et de silicium présentent une durée de vie améliorée par rapport au silicium pur (> 100 cycles) mais ceux-ci ne contiennent généralement que 10% de silicium ; au-delà de 10% de silicium, la perte de capacité en cyclage devient très importante. De ce fait, la capacité de l'électrode négative avec une durée de vie acceptable est de l'ordre de 750 mAh/g et une capacité volumique de 1240 mAh/cm$^3$ (capacité exprimée à l'état chargé).

Les solutions que l'on peut identifier dans la littérature proposent essentiellement de résoudre le problème de la perte de contact électrique lié au gonflement du matériau au cours du cyclage. Dans cet objectif, l'art antérieur concerne la réalisation de matériaux composites silicium / carbone (graphite, noir de carbone, nanotubes), silicium / métal, couche mince, utilisation de liant à fort pouvoir adhésif (CarboxyMéthylCellulose (CMC), acide polyacrylique ou dérivés, polyimide). Le document FR-A-2 885 734 décrit un procédé de fabrication d'un matériau composite de silicium et de carbone.

Par ailleurs, le silicium et l'étain sont deux éléments formant des alliages avec le lithium qui ont des propriétés complémentaires : le silicium très peu conducteur coalesce peu alors que l'étain très conducteur a tendance à coalescer durant le fonctionnement électrochimique. La combinaison de ces deux éléments dans un alliage à base de lithium est donc attractive.

Néanmoins, la synthèse d'un alliage contenant du silicium et de l'étain est compliquée en raison du caractère malléable de l'étain qui a alors tendance à créer des agglomérats de grande taille. Le matériau ainsi obtenu est difficilement mis en oeuvre comme matériau actif d'électrode en raison de sa forte granulométrie (>35$\mu$m) et les résultats électrochimiques sont peu probants.

Le document US2007/0148544 décrit un procédé de fabrication d'un alliage à base de silicium et d'étain. Ce document décrit aux exemples 15 et 16 l'étape de préparation d'un mélange d'une poudre de silicium, d'une poudre d'étain et d'une poudre de cobalt ou de nickel, suivie de la synthèse de l'alliage par mécanosynthèse. D'une part, l'alliage est obtenu en une seule étape de mécanosynthèse. D'autre part, l'étape de mécanosynthèse est effectuée en l'absence de poudre de carbone. L'alliage obtenu dans ces deux exemples comprend une phase amorphe de silicium et une phase amorphe d'étain.

Le document JP2005-158305 décrit un procédé de fabrication d'un alliage à base de silicium et d'étain. Ce document décrit à l'exemple 38 l'étape de mélange de silicium, d'étain, d'argent et de fer sous forme de poudres. L'alliage est obtenu par mécanosynthèse. Le déroulement de la mécanosynthèse est interrompu à mi-chemin pour permettre l'incorporation d'une poudre d'un matériau carboné. Le composé obtenu présente une capacité électrochimique de 910 mAh/g. Celle-ci chute après cinq cycles à 567 mAh/g. La durée de vie en cyclage de cet exemple n'est donc pas satisfaisante. Par ailleurs, comme expliqué ci-avant, la' synthèse d'un alliage en partant d'un mélange de poudres contenant à la fois du silicium et de l'étain est compliquée en raison du caractère malléable de l'étain qui a alors tendance à créer des agglomérats de grande taille.

On recherche donc un matériau d'électrode négative d'accumulateur lithium-ion présentant une capacité électrochimique massique supérieure à 1000 mAh/g, une capacité volumique à l'état chargé d'au moins 1800 mAh/cm$^3$, ainsi qu'une durée de vie en cyclage élevée.

On recherche également un procédé permettant de fabriquer un alliage à base d'étain et de silicium qui puisse être facilement utilisé comme matériau d'électrode négative, c'est-à-dire avec une granulométrie suffisamment fine pour être mise en oeuvre comme matière active d'une électrode négative d'un accumulateur au lithium. On cherche également un procédé permettant de réduire la décomposition d'un pré-alliage à base d'étain.

RESUME DE L'INVENTION

L'invention a pour objet un alliage comprenant étain, silicium et carbone, et contenant une phase cristalline M-Sn, M étant un métal inerte. Un métal inerte étant défini comme un métal ne formant pas de composés lithiés ayant une quantité de lithium significative, c'est-à-dire supérieure à $0,05Li/M$, au potentiel de formation des composés $SiLi_x$ (potentiel supérieur à 50 mV par rapport au couple $Li^+/Li°$).

L'invention a également pour objet un alliage comprenant étain et silicium comprenant :

a) une phase nanocristalline contenant au moins 50% atomique de l'élément silicium $Si°$ ;
b) une phase nanocristalline contenant un composé à base d'étain ;
c) une phase nanocristalline constituée de l'élément étain $Sn°$.
Selon un mode de réalisation, la phase nanocristalline a) et/ou des particules contenant du silicium sont recouvertes au moins partiellement par la phase nanocristalline b) et/ou la phase nanocristalline c). Selon un mode de réalisation, la phase nanocristalline a) et/ou au moins une particule contenant du silicium sont recouvertes au moins partiellement par une phase nanocristalline riche en étain, une phase riche en étain étant présente si, sur au moins un profil de concentration mesuré au microscope électronique à transmission, l'alliage présente un pic de concentration tel que le ratio $Sn_{max}/ Max(Sn_1, Sn_2)$ est supérieur à 1,1, de préférence supérieur à 1,3 ; où
$Sn_{max}$ désigne la concentration massique au maximum du pic de concentration de l'étain ;
$Sn_1$ et $Sn_2$ désignent les concentrations massiques d'étain aux deux bases du pic ; et
$Max(Sn_1, Sn_2)$ représente la valeur maximum de $Sn_1$ et de $Sn_2$ ;
le profil de concentration ayant pour origine un point éloigné d'une distance comprise entre 20 et 100 nm du centre des particules contenant du silicium ;
le centre des particules contenant du silicium étant défini comme le point correspondant au centre des zones de concentration les plus élevées en silicium mesurées par imagerie par microscopie électronique à transmission (MET).

Selon un mode de réalisation, la quantité d'étain $Sn°$ dans la phase nanocristalline c) représente jusqu'à 50%, de préférence de 5 à 50%, de préférence de 10 à 40% de la quantité totale d'étain présente dans l'alliage.
Selon un mode de réalisation, la quantité d'étain $Sn°$ dans la phase nanocristalline c) représente moins de 5%, de préférence moins de 3% de la quantité totale d'étain présente dans l'alliage.
Selon un mode de réalisation, l'alliage a pour formule $Si_aSn_bC_cM_m$ où
M représente au moins un métal inerte, Al ou un mélange de ceux-ci ;

$$0,20 \leq a \leq 0,80 ;$$

$$0,05 \leq b \leq 0,40 ;$$

$$0,05 \leq c \leq 0,50 ;$$

$$0,01 \leq m \leq 0,30 ;$$

$$a + b > 0,45 ;$$

$$a+b+c+m = 1.$$

Selon un mode de réalisation, le pourcentage massique de la quantité de phase contenant au moins 95% de silicium dans la phase a) est supérieur à 30%, de préférence supérieur à 40% du pourcentage massique total de silicium contenu dans l'alliage.
Selon un mode de réalisation, l'alliage ne comprend pas de phase SiC.
Selon un mode de réalisation, l'alliage ne comprend pas de carbone cristallin.
Selon un mode de réalisation, l'alliage comprend l'élément Al présent en une fraction atomique inférieure à 0,05, de préférence de 0,02 à 0,03 par rapport à l'alliage.

Selon un mode de réalisation, la taille des particules contenant du silicium est de 20 à 200 nm, de préférence de 20 à 100 nm, de préférence de 20 à 50 nm.

L'invention a également pour objet une électrode comprenant un alliage selon l'invention.

L'invention a également pour objet un accumulateur lithium-ion comprenant au moins une électrode négative qui est une électrode selon l'invention.

Enfin, l'invention a pour objet un procédé de fabrication d'un alliage comprenant du silicium et de l'étain comprenant les étapes de :

a) préparation d'un préalliage à partir d'étain et d'au moins un métal inerte, ou d'aluminium ou d'un mélange de ceux-ci ;
b) ajout de carbone, de silicium et éventuellement de métal inerte au préalliage de l'étape a) ;
c) synthèse de l'alliage.

Ce procédé résout le problème de la décomposition totale du préalliage en étain $Sn°$ et permet d'obtenir une poudre d'un alliage à base d'étain et de silicium présentant une granulométrie suffisamment fine pour être mise en oeuvre comme matière active d'une électrode négative d'un accumulateur lithium-ion.

Selon un mode de réalisation, la surface spécifique du carbone est comprise entre 20 et 500 $m^2/g$, de préférence entre 20 et 100 $m^2/g$.

BREVE DESCRIPTION DES FIGURES

Figure 1 : Analyse par la méthode Rietveld du composé $Ni_{3,4}Sn_4$. Le diffractogramme est affiné avec une phase majoritaire (99,5 % en masse) $Ni_{3,4}Sn_4$.

Figure 2 : Evolution des diffractogrammes par diffraction des rayons X (DRX) en fonction du temps de broyage. Les phases $Ni_{3,4}Sn_4$, $Sn°$ et $Si°$ sont identifiées.

Figure 3 : Analyse Rietveld du composé $Si_{0,32}Sn_{0,18}C_{0,32}Ni_{0,14}Al_{0,04}$ après 20h de broyage. Le diagramme est affiné avec trois phases : $Ni_{3,4}Sn_4$, Si et Sn.

Figure 4 : Cartographies des concentrations des éléments Si, Sn, Ni, Al et C dans l'alliage mesurées au MET par analyse EDX.

Figure 5a : Cartographie de la concentration d'étain dans l'alliage mesurée au MET par analyse EDX.

Figure 5b : profil de concentration massique de Si, Sn, Ni et C mesuré sur la ligne définie sur la Figure 5a. $Sn_{max}$ désigne la concentration au sommet du pic de concentration et $Sn_1$ et $Sn_2$ les concentrations de Sn aux deux bases du pic. Le segment AB désigne la ligne sur laquelle le profil de concentration est mesuré.

Figure 6 : Evolution du potentiel de l'électrode à base d'alliage $Si_{0,32}Sn_{0,18}C_{0,32}Ni_{0,14}Al_{0,04}$ en fonction de la capacité chargée pour les premiers cycles de charge/décharge. Mesure de la capacité réversible du composé $Si_{0,32}Sn_{0,18}C_{0,32}Ni_{0,14}Al_{0,04}$.

Figure 7 : Evolution de la capacité réversible de l'alliage $Si_{0,32}Sn_{0,18}C_{0,32}Ni_{0,14}Al_{0,04}$ en fonction du nombre de cycles charge/décharge.

EXPOSE DETAILLE DE MODES DE REALISATION DE L'INVENTION

Le procédé de fabrication selon l'invention permet de fabriquer un alliage à base de silicium et d'étain en résolvant le problème de la tendance de l'étain à créer des agglomérats de grande taille, qui ne peuvent pas être ensuite utilisés dans la fabrication d'une matière active d'électrode négative d'accumulateur au lithium. Un alliage peut être défini comme un produit métallique obtenu en incorporant à un métal un ou plusieurs éléments. Les éléments d'un alliage réagissent ensemble pour former un système constitué de plusieurs phases.

Afin de résoudre ce problème, on prépare dans une première étape un préalliage comprenant de l'étain et au moins un métal inerte ou Al ou un mélange de ceux-ci. Un métal inerte étant défini comme un métal ne formant pas de composés lithiés ayant une quantité de lithium significative, c'est-à-dire supérieure à 0,05Li/M, au potentiel de formation des composés SiLix (potentiel supérieur à 50 mV par rapport au couple $Li^+/Li°$.).

De préférence, le métal inerte est choisi dans le groupe comprenant Ni, Fe, Cu, Co, Mn, Ti, Zr, Y, Zn, Mo, Nb, V, W, Ag, Au, In, Mg, Pd, Pt, les terres-rares, les lanthanides, ou un mélange de ceux-ci.

On mélange de l'étain avec le ou les métaux inertes ou Al ou un mélange de ceux-ci. De préférence, l'étain et les métaux inertes et/ou Al sont sous forme de poudre. Le préalliage peut être obtenu par voie thermique ou par mécanosynthèse, par exemple par broyage du mélange de poudres dans un broyeur à billes (ball milling). Dans un mode préféré de réalisation, le métal inerte est le nickel. La fabrication du préalliage permet de limiter l'agglomération de l'étain.

De préférence, le préalliage a pour formule $Ni_{3+x}Sn_4$ avec x compris entre 0,2 et 0,6 ; de préférence entre 0,3 et 0,5. On peut par exemple fabriquer un préalliage de formule $Ni_{3,4}Sn_4$ par métallurgie des poudres du nickel (Cerac 99,9%, granulométrie < 45 μm) et de l'étain (Alfa-Aesar 99,8%, granulométrie <45 μm). Les poudres de nickel et d'étain sont pressées sous forme de pastilles qui sont ensuite placées dans une ampoule en silice scellée sous argon et recuites pendant environ une semaine à environ 700°C. D'autres pré-alliages peuvent être envisagés, tels que $Cu_6Sn_5$ et $Fe_{50}Sn_{50}$.

Dans une seconde étape, on fabrique, par exemple par mécanosynthèse, l'alliage définitif en ajoutant les éléments chimiques restants constitutifs de l'alliage, dont le silicium, avec du carbone à l'état finement divisé. Le silicium utilisé peut avoir une taille granulométrique inférieure ou égale à environ 1 μm.

Dans un mode particulier de réalisation, le carbone utilisé a une surface spécifique BET comprise entre 20 et 500 $m^2/g$, de préférence entre 20 et 50 $m^2/g$. En deçà de 20 $m^2/g$, il n'y a pas suffisamment d'interfaces carbone/poudre métallique pour éviter l'agglomération des particules. Au-delà de 500 $m^2/g$, la capacité irréversible de l'alliage est trop importante. Le carbone peut par exemple être sous forme de noir de carbone. Le graphite ordinaire tel que celui utilisé dans les électrodes négatives d'un accumulateur lithium-ion conventionnel et les fibres de carbone ne sont pas suffisants pour le procédé selon l'invention en raison de leur surface spécifique trop faible ou de leur facteur de forme inadapté. En l'absence de carbone à l'état finement divisé, l'alliage obtenu se présente sous forme de billes de plusieurs millimètres de diamètre qu'il est extrêmement difficile à réduire sous forme d'une poudre fine. L'analyse par diffraction des rayons X (DRX) et l'estimation de la quantité de chaque phase par affinement par la méthode de Rietveld montre qu'en l'absence de carbone à l'état divisé, le préalliage à base d'étain s'est totalement décomposé en formant de l'étain nanocristallin. Les analyses par microscopie électronique par transmission (MET) confirment la présence d'étain quasi pur. L'étain pur coalesce et adhère aux parois du récipient utilisé pour la mécanosynthèse. L'ajout de carbone finement divisé joue le rôle de lubrifiant et d'antiagglomérant pendant l'étape de préparation de l'alliage définitif. Il a pour effet de réduire la décomposition du pré-alliage en étain pur. Il permet donc de limiter la formation d'étain pur issu de la décomposition du pré-alliage d'étain, qui entraîne une agglomération importante des particules. En présence de carbone finement divisé, la phase M-Sn utilisée comme précurseur se décompose légèrement. On peut observer par rayons X et microscopie électronique à balayage à transmission, une très fine couche d'étain Sn° autour des nanocristallites de Silicium. La Demanderesse pense que ce type de nanostructure est bénéfique pour les performances en cyclage car l'étain permet d'accommoder l'interface entre le silicium, dont la surface va augmenter de 150% en charge, et les autres phases potentiellement inertes et dont la surface ne devraient pas ou peu varier. Ce type de nanostructure se révèle plus stable mécaniquement en cycles de gonflement/dégonflement de la matière active.

A l'issu de cette deuxième étape de synthèse de l'alliage, on obtient l'alliage définitif contenant les phases suivantes :

- une phase nanocristalline constituée du pré-alliage,
- une phase nanocristalline constituée d'élément silicium contenant au moins 50% atomique. On observe aussi par MET la présence de particules d'un composé contenant du silicium et du nickel.

Dans un mode de réalisation particulier, la quantité de silicium dans la phase nanocristalline constituée de l'élément silicium est supérieure à 50% atomique de la quantité totale de silicium contenu dans l'alliage.

Dans un mode de réalisation, les phases contenant de l'étain sont nanocristallines, c'est-à-dire que la taille des cristallites est inférieure à 100 nm, de préférence inférieure à 50 nm.

Dans un mode de réalisation, l'alliage ne comprend pas de phase SiC mesurable par diffraction des rayons X (DRX).

Dans un mode de réalisation, l'alliage ne comprend pas de carbone sous forme cristalline.

Le procédé selon l'invention peut être avantageusement utilisé pour fabriquer un alliage de formule $Si_aSn_bC_cM_m$ où M représente au moins un métal inerte ou A1 ou un mélange de ceux-ci; et dans laquelle :

$0,20 \leq a \leq 0,80$ ; de préférence $0,20 \leq a \leq 0,50$, de préférence encore $0,30 \leq a \leq 0,50$. Le silicium est le principal élément à l'origine des capacités massiques élevées ; trop peu de silicium mène à une capacité faible et trop de silicium mène à une durée de vie faible par perte de contacts électriques liés au gonflement et au caractère semi-conducteur du Silicium.

$0,05 \leq b \leq 0,40$ ; de préférence $0,10 \leq b \leq 0,30$, de préférence encore $0,15 \leq b \leq 0,25$. L'étain participe à la capacité. Il présente également l'avantage d'être très conducteur et ductile ce qui aide à maintenir les contacts électriques lors du gonflement et dégonflement. Néanmoins, l'étain pur a tendance à coalescer ce qui pose également des problèmes de durée de vie.

$0,05 \leq c \leq 0,50$ ; de préférence $0,10 \leq c \leq 0,40$, de préférence encore $0,10 \leq c \leq 0,25$. Le carbone sert de lubrifiant, d'antiagglomérant et minimise la réaction entre le silicium et la phase M-Sn. Il permet d'obtenir des poudres fines que l'on peut mettre en oeuvre facilement, et d'autre part, il aide à former une phase riche en étain autour de particules contenant du silicium. La présence de la phase riche en étain permet d'accommoder plus facilement les variations de volume du silicium au cours des cycles de charge et décharge de l'accumulateur. La quantité d'étain Sn° pure étant suffisamment réduite par le procédé selon l'invention pour que les phénomènes de coalescence ne se produisent pas.

$0,01 \leq m \leq 0,30$ ; de préférence $0,05 \leq m \leq 0,25$, de préférence encore $0,10 \leq m \leq 0,25$. Le métal inerte sert d'une part à limiter l'expansion volumique globale de l'alliage et d'autre part à assurer une bonne conduction électronique à l'intérieur des particules d'alliages. Néanmoins, une quantité trop importante pénalise la capacité.

L'addition d'aluminium dans l'alliage permet d'améliorer les propriétés en cyclage. Il participe également à la capacité (à hauteur de 1Li/atome à comparer à 4,4Li pour Si et Sn et 0,17Li pour le graphite). De préférence, la fraction atomique d'aluminium est inférieure à 0,05, de préférence de 0,02 à 0,03 par rapport à l'alliage. Au-delà de 0,05, la capacité et la durée de vie de l'alliage sont réduites.

$a + b > 0,45$. Cette condition permet d'avoir suffisamment de Si et de Sn pour assurer une capacité élevée.

L'alliage selon l'invention possède une capacité électrochimique élevée, d'au moins 800 mAh/g, ainsi qu'une durée de vie élevée en cyclage. Il peut donc être utilisé de manière avantageuse comme matière électrochimiquement active d'une électrode négative d'un accumulateur au lithium.

EXEMPLES

Le composé $Si_{0,32}Sn_{0,18}C_{0,32}Ni_{0,14}Al_{0,04}$ a été élaboré par mécanosynthèse à partir de poudre d'aluminium, de silicium et d'un pré-alliage de formule $Ni_{3,4}Sn_4$. 32% atomique de carbone, par exemple sous forme de noir de carbone, ont été ajoutés comme agent lubrifiant pendant le broyage. L'aluminium utilisé (Aldrich, pureté : 99%) a une taille de particules inférieure à 75 $\mu$m et le silicium, une taille de particules inférieure à 1 $\mu$m.

Le mélange des poudres de Si, Al, $Ni_{3,4}Sn_4$ et de carbone a été introduit dans une jarre de broyage contenant des billes (diamètre = 7 mm) en acier pour effectuer le broyage mécanique sous atmosphère inerte (argon). La masse totale de la poudre de départ hors carbone est de 6 g. Le rapport des masses billes/poudre est égal à 5. Le broyage est réalisé dans un broyeur planétaire (Fritsch P7) avec une vitesse de rotation du plateau de 600 tpm. Des prélèvements de poudre ont été effectués à différents stades du broyage (temps de broyage égal à 1h, 5h, 10h et 20h) pour réaliser des analyses par diffraction des rayons X (DRX). A chaque prélèvement, toute la poudre est mécaniquement décollée des parois de la jarre pour obtenir un échantillon représentatif de l'ensemble de la poudre. A la fin du broyage (20h), les échantillons ont été analysés par DRX et par microscopie électronique à transmission (MET).

Afin d'obtenir des échantillons MET suffisamment minces, le produit de broyage est mélangé à de la poudre de cuivre, laminé dans une feuille en acier et aminci par abrasion ionique. Les observations MET ont été faites sur un microscope électronique Tecnai G2 F20 opérant a une tension d'accélération de 200 kV à la fois en mode microscopie électronique à transmission (TEM) pour les images et en mode microscopie électronique en transmission à balayage (STEM) couplée à l'analyse chimique (EDX) pour l'acquisition des cartographies et des lignes de profils élémentaires. La microscopie électronique par transmission offre une résolution de l'ordre du nanomètre cube.

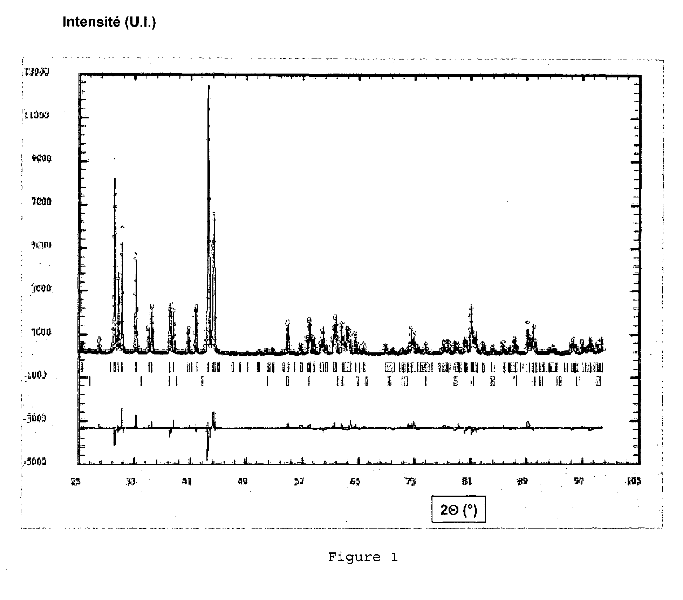

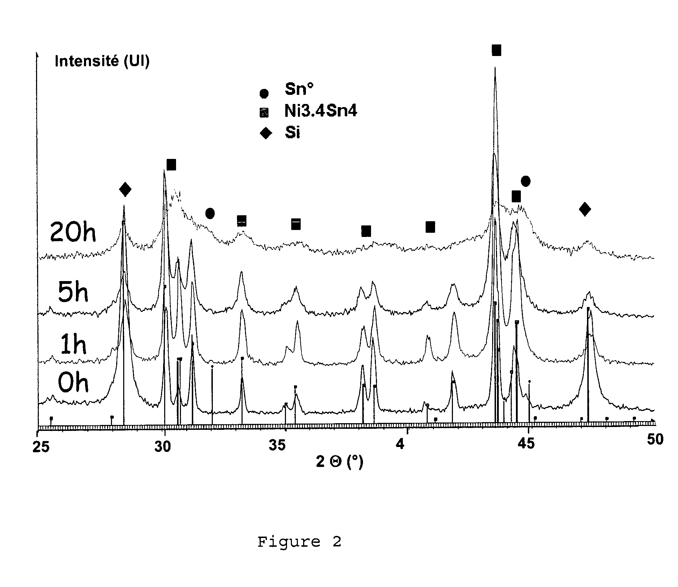

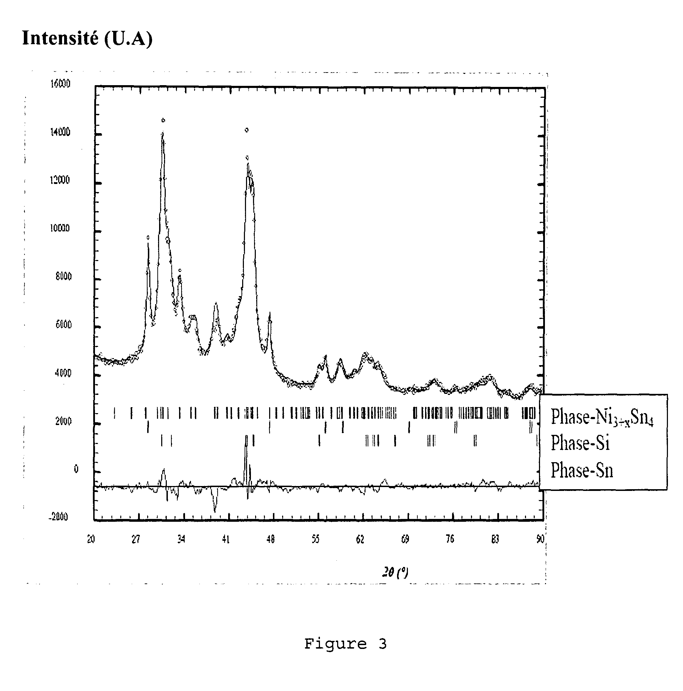

Le diffractogramme DRX du pré-alliage $Ni_{3,4}Sn_4$ est représenté à la Figure 1. L'évolution des diffractogrammes DRX des phases $Ni_{3,4}Sn_4$, Sn° et silicium dans le composé $Si_{0,32}Sn_{0,18}C_{0,32}Ni_{0,14}Al_{0,04}$ en fonction du temps de broyage est montrée à la Figure 2. Le diffractogramme DRX des phases $Ni_{3,4}Sn_4$, étain et silicium dans le composé $Si_{0,32}Sn_{0,18}C_{0,32}Ni_{0,14}Al_{0,04}$ après 20h de broyage est montrée à la Figure 3. Au cours du broyage mécanique, on assiste à la disparition des raies de diffraction de l'aluminium et à l'élargissement des pics correspondants aux phases Si et $Ni_{3,4}Sn_4$. Le diffractogramme de l'échantillon après 20 heures de broyage peut s'indexer correctement avec trois phases : une phase cristalline avec la structure du silicium (groupe d'espace F d-3 m), une phase cristalline de structure type $Ni_{3,4}Sn_4$ (groupe d'espace C 2/m) et une phase cristalline minoritaire de type Sn (groupe d'espace I $4_1$/a m d). L'analyse Rietveld de l'échantillon après 20 heures de broyage permet d'évaluer les teneurs massiques des phases type $Ni_{3,4}Sn_4$, Si et Sn° à respectivement 72 % en masse, 23 % en masse et 5 % en masse. Les tailles de cristallite sont proches de 10 nm pour toutes les phases.

Tableau 1 : comparaison des paramètres de maille des phases affinées par la méthode Rietveld de l'alliage $Si_{0,32}Sn_{0,18}C_{0,32}Ni_{0,14}Al_{0,04}$ avec ceux de Si et de Sn°.

| Phase | G. Espace | Par. maille (Å) (affinement) | Par. maille (Å) (éléments purs) | Taille cristallite (nm) | Teneur (mass.%) |
|-------|-----------|------------------------------|----------------------------------|-------------------------|-----------------|
| $Ni_{3,4}Sn_4$ | C 2/m | $a$ = 12,37(1) $b$ = 4,057(1) | | 7 | 72 |

(suite)

| Phase | G. Espace | Par. maille (Å) (affinement) | Par. maille (Å) (éléments purs) | Taille cristallite (nm) | Teneur (mass.%) |
|---|---|---|---|---|---|
| | | $c = 5,194(1)$ $\beta = 104,6(1)°$ | | | |
| Si | $F\,d\,-3\,m$ | $a = 5,434(3)$ | $a = 5,431$ | 13 | 23 |
| Sn | $I\,4_1/a\,m\,d$ | $a = 5,855(1)$ $c = 3,184(1)$ | $a = 5,830$ $c = 3,186$ | 10 | 5 |

L'ajout de carbone permet de garder presque dans son intégralité la phase de départ $Ni_{3,4}Sn_4$ lors du broyage mécanique. Toutefois, pour des temps longs du broyage (tB = 20h), la phase type Sn° commence à apparaître (5 mass. %) ce qui peut indiquer un début de décomposition de la phase de type $Ni_{3,4}Sn_4$.

La microstructure du matériau après 20 heures de broyage a été analysée par MET. L'acquisition d'images en mode microscopie électronique en transmission à balayage (STEM) et des cartographies analytiques par microscopie électronique à balayage couplée à l'analyse chimique (EDX) montrent la formation d'une microstructure bimodale. Cette microstructure est formée par du Si pur entouré d'une deuxième composante plus fine et multi-élémentaire. Les particules contenant du silicium ont une taille d'environ 100 nm.

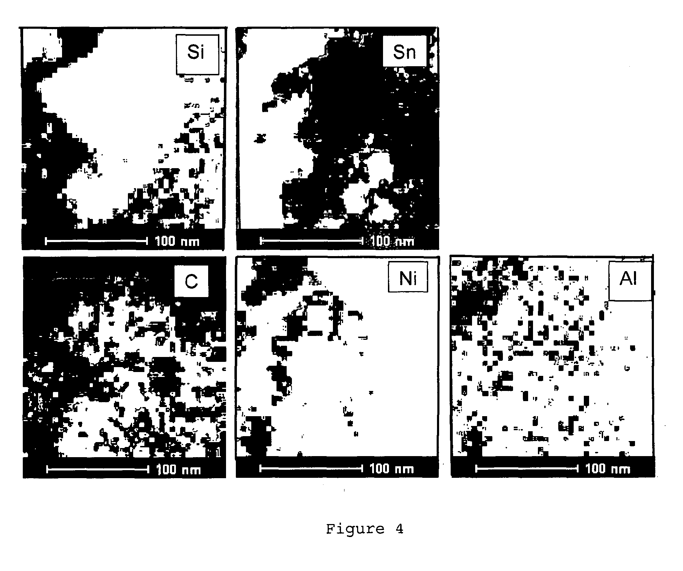

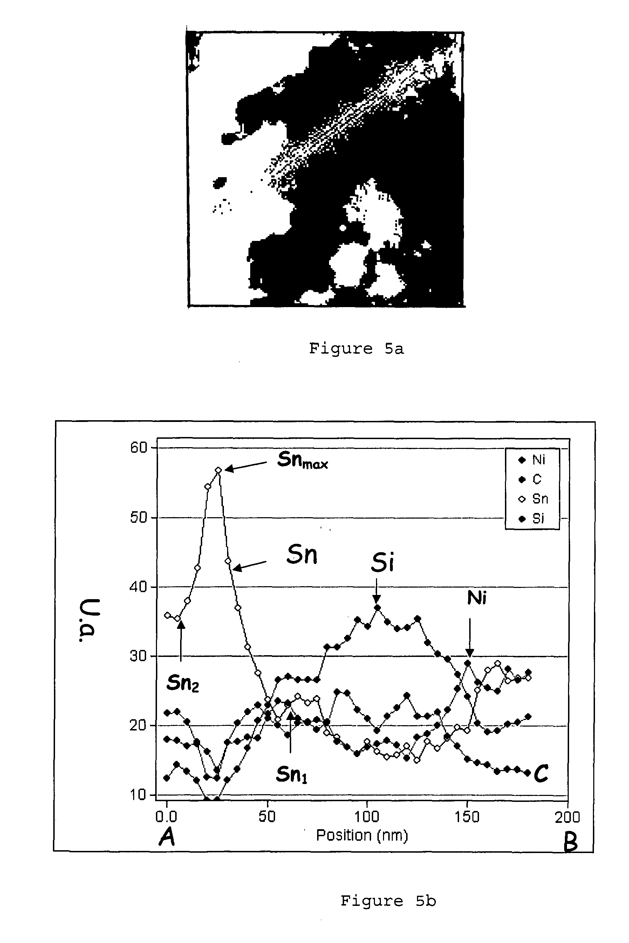

La composition de la phase multi-élémentaire n'est pas homogène. En effet, sur les cartographies EDX (Figure 4), on peut noter, par exemple, que le renforcement du signal de Sn n'est pas suivi par celui du Ni. Une analyse élémentaire du profil de concentration sur une zone linéaire entre une phase riche en Sn et une phase riche en Si (Fig. 5a et 5b) met en évidence des régions de taille nanométrique enrichies en Sn. Ce résultat est en accord avec la détection d'une phase minoritaire type Sn par DRX (Fig. 3). Par ailleurs, le carbone se trouve très dispersé dans le matériau.

La Figure 5b représente une cartographie chimique selon la ligne de coupe de la Figure 5a. La région du profil comprise entre environ 50 et 150 nm indique une présence importante de Silicium. Celui-ci représente de 20-35 unités arbitraires (u.a.). En deçà de 50 nm et au dessus de 150 nm, la présence de silicium est moins importante car celui-ci représente moins de 22 u.a. Inversement, la région du profil comprise entre environ 50 et 150 nm indique une présence faible de phase contenant de l'étain, c'est-à-dire contenant soit Sn°, soit M-Sn. Celle-ci représente de 15 à 25 u.a. En deçà d'environ 50 nm et au dessus de 150 nm, la présence de la phase contenant de l'étain est plus importante car elle représente au moins 20 u.a. L'enrichissement en étain est particulièrement marqué à la position 25 nm du profil, à laquelle on mesure une quantité de phase contenant de l'étain de 55 u.a. Le profil de la Figure 5b montre donc qu'il existe autour des particules contenant du silicium, une phase enrichie en étain.

La figure 5b permet d'illustrer ce que l'on entend par phase enrichie en étain. Une phase est enrichie en étain si sur au moins un profil de concentration mesuré au microscope électronique à transmission, l'alliage présente un pic de concentration tel que

le ratio $Sn_{max}/ Max(Sn_1, Sn_2)$ est supérieur à 1,1, de préférence supérieur à 1,3 ; où

$Sn_{max}$ désigne la concentration massique au maximum du pic de concentration de l'étain ;

$Sn_1$ et $Sn_2$ désignent les concentrations massiques d'étain aux deux bases du pic ; et

$Max(Sn_1, Sn_2)$ représente la valeur maximum de $Sn_1$ et de $Sn_2$ ;

le profil de concentration ayant pour origine un point éloigné d'une distance comprise entre 20 et 100 nm du centre des particules contenant du silicium ;

le centre des particules contenant du silicium étant défini comme le point correspondant au centre des zones de concentration les plus élevées en silicium mesurées par imagerie par microscopie électronique à transmission (MET).

Préparation des électrodes :

La poudre de matériau actif $Si_{0,32}Sn_{0,18}C_{0,32}Ni_{0,14}Al_{0,04}$ est mélangée avec du noir de carbone et de la carboxyméthylcellulose (CMC) en milieu aqueux. La suspension est homogénéisée puis répartie uniformément sur une feuille de cuivre. Après séchage, l'électrode contient 30% de noir de carbone et 30% de CMC. Les électrodes sont testées en technologie boutons en utilisant du lithium métal comme contre-électrode.

Résultats électrochimiques:

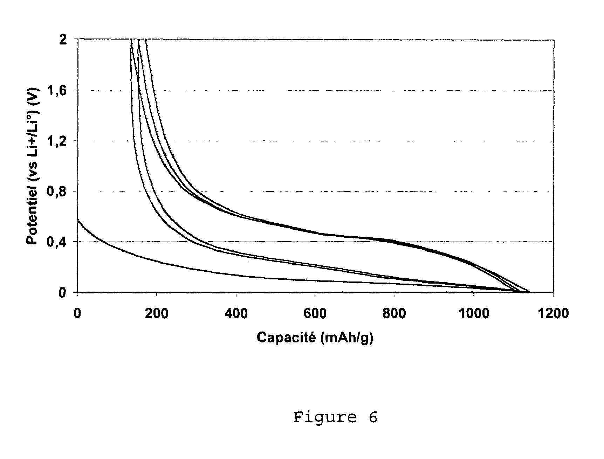

La Figure 6 représente le profil des premiers cycles de charge et de décharge. La capacité réversible initiale est de 950 mAh/g.

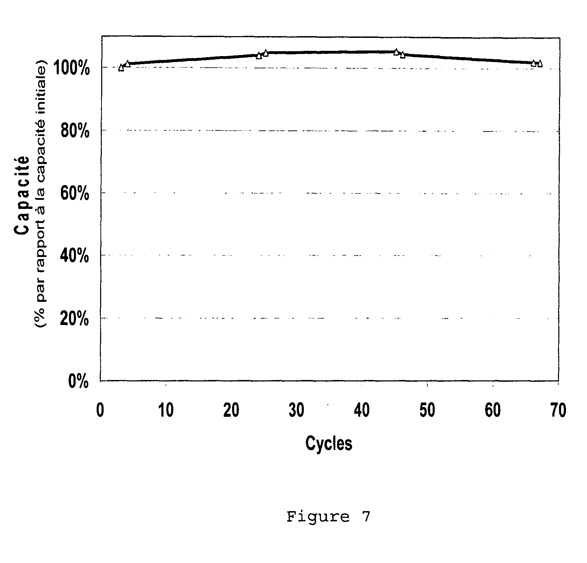

La Figure 7 représente la caractérisation de la stabilité de la capacité en cyclage électrochimique. On constate qu'il n'y a pas de perte significative de la capacité après 70 cycles.

La capacité électrochimique du matériau $Si_{0,32}Sn_{0,18}C_{0,32}Ni_{0,14}Al_{0,04}$ donne donc d'excellents résultats électrochimiques, c'est-à-dire une capacité initiale d'environ 950 mAh/g, stable sur une centaine de cycles.

L'alliage selon l'invention présente une capacité électrochimique élevée pour une mesure effectuée à une température de 0°C. Il peut être avantageusement utilisé à de très basses températures, par exemple comprises entre -40°C et +10°C.

Les exemples d'alliages suivants peuvent aussi être préparés selon le procédé de l'invention.

- $Si_{0,37}Sn_{0,14}Al_{0,02}Cu_{0,17}C_{0,30}$ (% atomique) à partir d'un pré-alliage $Cu_6Sn_5$ par métallurgie des poudres puis réalisation de l'alliage par mécanosynthèse (environ 20h) à partir d'une poudre de silicium de granulométrie $0,2\mu m$ ; de carbone ayant une surface spécifique de $30m^2/g$ et le pré-alliage.

- $Si_{0,33}Sn_{0,12}Al_{0,03}Fe_{0,12}C_{0,40}$ (% atomique) à partir d'un pré-alliage $Fe_{50}Sn_{50}$ par métallurgie des poudres puis réalisation de l'alliage par mécanosynthèse (environ 20h) à partir d'une poudre de silicium de granulométrie $0,2\mu m$ ; de carbone ayant une surface spécifique de $30m^2/g$ et le pré-alliage.

**Revendications**

1. Alliage comprenant étain, silicium et carbone, et contenant une phase cristalline M-Sn, M étant un métal inerte.

2. Alliage comprenant étain et silicium, comprenant :

   a) une phase nanocristalline contenant au moins 50% atomique de l'élément silicium Si° ;
   b) une phase nanocristalline contenant un composé à base d'étain ;
   c) une phase nanocristalline constituée de l'élément étain Sn°.

3. Alliage selon la revendication 2, dans lequel la phase nanocristalline a) et/ou des particules contenant du silicium sont recouvertes au moins partiellement par la phase nanocristalline b) et/ou la phase nanocristalline c).

4. Alliage selon la revendication 3, dans lequel la phase nanocristalline a) et/ou au moins une particule contenant du silicium sont recouvertes au moins partiellement par une phase nanocristalline riche en étain, une phase riche en étain étant présente si, sur au moins un profil de concentration mesuré au microscope électronique à transmission, l'alliage présente un pic de concentration tel que
   le ratio $Sn_{max}/ Max(Sn_1, Sn_2)$ est supérieur à 1,1, de préférence supérieur à 1,3 ;
   où
   $Sn_{max}$ désigne la concentration massique au maximum du pic de concentration de l'étain ;
   $Sn_1$ et $Sn_2$ désignent les concentrations massiques d'étain aux deux bases du pic ; et
   $Max(Sn_1, Sn_2)$ représente la valeur maximum de $Sn_1$ et de $Sn_2$ ;
   le profil de concentration ayant pour origine un point éloigné d'une distance comprise entre 20 et 100 nm du centre des particules contenant du silicium ;
   le centre des particules contenant du silicium étant défini comme le point correspondant au centre des zones de concentration les plus élevées en silicium mesurées par imagerie par microscopie électronique à transmission (MET).

5. Alliage selon l'une des revendications 3 ou 4, dans lequel la quantité d'étain Sn° dans la phase nanocristalline c) représente jusqu'à 50%, de préférence de 5 à 50%, de préférence de 10 à 40% de la quantité totale d'étain présente dans l'alliage.

6. Alliage selon l'une des revendications 2 à 4, dans lequel la quantité d'étain Sn° dans la phase nanocristalline c) représente moins de 5%, de préférence moins de 3% de la quantité totale d'étain présente dans l'alliage.

7. Alliage selon l'une des revendications précédentes, de formule $Si_aSn_bC_cM_m$ où
   M représente au moins un métal inerte, Al ou un
   mélange de ceux-ci ;

$$0,20 \leq a \leq 0,80 \; ;$$

$$0,05 \leq b \leq 0,40 \; ;$$

$$0,05 \leq c \leq 0,50 \; ;$$

$$0,01 \leq m \leq 0,30 \; ;$$

$$a + b > 0,45 \; ;$$

$$a+b+c+m = 1.$$

**8.** Alliage selon l'une des revendications 2 à 7, dans lequel le pourcentage massique de la quantité de phase contenant au moins 95% de silicium dans la phase a) est supérieur à 30%, de préférence supérieur à 40% du pourcentage massique total de silicium contenu dans l'alliage.

**9.** Alliage selon l'une des revendications 1 à 8 ne comprenant pas de phase SiC.

**10.** Alliage selon l'une des revendications 1 à 9 ne comprenant pas de carbone cristallin.

**11.** Alliage selon l'une des revendications 1 à 10, comprenant Al présent en une fraction atomique inférieure à 0,05, de préférence de 0,02 à 0,03 par rapport à l'alliage.

**12.** Alliage selon l'une des revendications 2 à 11, dans lequel la taille des particules contenant du silicium est de 20 à 200 nm, de préférence de 20 à 100 nm, de préférence de 20 à 50 nm.

**13.** Electrode comprenant un alliage selon l'une des revendications 1 à 12.

**14.** Accumulateur lithium-ion comprenant au moins une électrode négative qui est une électrode selon la revendication 13.

**15.** Procédé de fabrication d'un alliage comprenant du silicium et de l'étain comprenant les étapes de :

a) préparation d'un pré-alliage à partir d'étain et d'au moins un métal inerte, ou d'aluminium ou d'un mélange de ceux-ci ;
b) ajout de carbone, de silicium et éventuellement de métal inerte au préalliage de l'étape a) ;
c) synthèse de l'alliage.

**16.** Procédé selon la revendication 15, dans lequel la surface spécifique du carbone est comprise entre 20 et 500 $m^2$/g, de préférence entre 20 et 100 $m^2$/g.

**17.** Procédé selon l'une des revendications 15 à 16 pour la fabrication d'un alliage selon l'une des revendications 1 à 12.

**Intensité (U.I.)**

Figure 1

Figure 2

**Intensité (U.A)**

Figure 3

Figure 4

Figure 5a

Figure 5b

Figure 6

Figure 7

Europäisches
Patentamt

European
Patent Office

Office européen
des brevets

## RAPPORT DE RECHERCHE EUROPEENNE

Numéro de la demande

EP 09 29 0266

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/115734 A1 (ISHIHARA HIDETAKA [JP]; MIZUTANI SATOSHI [JP]; INOUE HIROSHI [JP]) 1 juin 2006 (2006-06-01) * revendication 3 * ----- | 1 | INV. H01M4/38 |
| A,D | US 2007/148544 A1 (LE DINH BA [US]) 28 juin 2007 (2007-06-28) * page 4; tableau 1A * ----- | 2-17 | |

DOMAINES TECHNIQUES
RECHERCHES (IPC)

H01M

Le présent rapport a été établi pour toutes les revendications

| Lieu de la recherche | Date d'achèvement de la recherche | Examinateur |
|---|---|---|
| Munich | 16 septembre 2009 | Koessler, Jean-Luc |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0266

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-2009

| Document brevet cité au rapport de recherche | Date de publication | Membre(s) de la famille de brevet(s) | Date de publication |
|---|---|---|---|
| US 2006115734 A1 | 01-06-2006 | CN 1964109 A<br>JP 2006134784 A<br>KR 20060052498 A | 16-05-2007<br>25-05-2006<br>19-05-2006 |
| US 2007148544 A1 | 28-06-2007 | EP 1974408 A2<br>JP 2009521792 T<br>KR 20080081283 A<br>WO 2007120347 A2 | 01-10-2008<br>04-06-2009<br>09-09-2008<br>25-10-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2885734 A
- US 20070148544 A

- JP 2005158305 A